# EUROPEAN PATENT APPLICATION

(11) **EP 4 112 567 A1**
(43) Date of publication of application: **04.01.2023**
(21) Application number: 21305924.9
(22) Date of filing: 02.07.2021
(51) Int. Cl.: C02F 9/00, C02F 1/02, C02F 1/20, C02F 1/469, C02F 1/52, C02F 1/66, C02F 1/68, C02F 103/08, C02F 1/06, C02F 1/44

(54) **METHOD AND INSTALLATION FOR PRODUCING DESALTED AND MINERALIZED WATER FROM SALINE WATER**

(71) Applicant: Suez International, 92040 Paris La Défense Cedex (FR); ResourSEAs S.r.l., 90128 Palermo (IT)
(72) Inventor: Pastorelli, Delia, 92040 PARIS LA DEFENSE (FR); Baaklini, Daniel, 92040 PARIS LA DEFENSE (FR); Cipollina, Andrea, 90138 Palermo (IT); Micale, Giorgio, 90143 Palermo (IT); Tamburini, Alessandro, 90014 Casteldaccia (IT); Papapetrou, Michael, Dublin, A94D2X3 (IE); Bevacqua, Maurizio, 41124 Modena (IT); Vicari, Fabrizio, 90145 Palermo (IT)
(74) Representative: Fédit-Loriot

(57) **Abstract**

The present invention relates to a method for providing desalted and mineralized water from saline water, in particular drinking water. It further pertains to an installation for providing mineralized (drinking) water from saline water. The method and installation of the invention also allow recovering of minerals, in particular calcium and magnesium containing minerals.

## Description

### Technical Field

The present invention pertains to a method for providing desalted and mineralized water from saline water, in particular drinking water. It further pertains to an installation for providing mineralized (drinking) water from saline water. The method and installation of the invention also allow recovering of minerals, in particular minerals containing calcium and magnesium.

### Technological Background

Reverse osmosis treatment of a brine or seawater produces a permeate and a retentate. The ion depletion is such that the permeate requires re-mineralizing to be suitable for its use, for instance as drinking water. On the other hand, disposal of the retentate constitutes a major cost for water treatment plants, in particular in the case of desalination plants.

In parallel, the retentate has a very high ion concentration, in particular in calcium and magnesium ions. Some of these ions, such as magnesium ions, belong to a critical raw materials list, for which recovery is regarded as strategic for economic and supply risk reasons.

Furthermore, calcium and magnesium ions are constitutive of the hardness of water, and have to be present in water in defined quantities, for use for human consumption, while for specific other applications, minimum levels of hardness are required for limiting the corrosivity of water - however not exceeding values which can cause the formation of scaling in equipment and piping.

Along with hardness, alkalinity of the produced water is of primary importance for many applications. For instance, influence of pH plays a key role in agricultural applications. Similar problems arise for any desalination treatment of saline solution which produces a desalinated water requiring remineralizing and a brine concentrated in ions.

Many solutions have already been described in the art to recover said ions constituting alkalinity and hardness from a retentate or a brine from a desalination plant or directly from seawater. For example, references [1] and [2] disclose methods for removing minerals from brine or seawater. In both documents, calcium ions are removed first, by precipitation of gypsum or other calcium salts, and, in a second step, magnesium salts are crystallized from an effluent depleted in calcium ions. Reference [1] also describes removal of magnesium hydroxide followed by calcium removal, but the solution recovered after calcium removal is further treated to remove the remaining magnesium and calcium ions. In particular, in reference [1] magnesium is recovered using lime, i.e. calcium hydroxide slurry, as reagent. This reagent is obtained with a process named slaking which is characterized by moderate control of solid dissolution, hence reagent concentration and in turn moderate control on Mg(OH)₂ crystallization. Additionally, quicklime slaking brings many impurities, affecting the purity of the recovered Mg(OH)₂. In reference [2], a part of incoming seawater is submitted to a first step in which the calcium is precipitated in the form of solid CaCO₃ to produce a treated water depleted in calcium ions. The solid CaCO₃ is then acidified in a separate step to produce (CO₂) which can be recovered for sequestration or to produce fuels and propellants. Reference [2] also discloses the use of an electrodialysis unit receiving aqueous NaCl to produce NaOH and HCI which can be used in the process disclosed, in particular to adjust the pH and alkalinity of treated water depleted in calcium ions. However, it is worth noting that said electrodialysis unit is used to produce, from another part of the incoming seawater, the chemicals needed for the process itself. The water used for the electrodialysis unit itself, which requires to be depleted in divalent ions, is produced with a specific pre-treatment unit to remove organic compounds and minerals other than NaCl from incoming seawater which produces a waste stream. Such process is therefore rather complicated, costly, and produces waste streams.

In document [3], minerals are not removed by nanofiltration, thus producing not solids or slurry, but solutions rich in Mg²⁺, Ca²⁺ and SO₄²⁻ ions. These ions enriched solutions are suitable for use as additives to produce soft, drinking or irrigation water from desalinated water. However, the use of multiple nanofiltration units comes with a non-negligible energy consumption and scaling issues related to gypsum (CaSO₄*2H₂O) accumulation, while the bitter epsomite (MgSO₄*7H₂O) is usually not employed for human consumption.

It is also known to produce Mg(OH)₂ from brine using lime or Ca(OH)₂ as precipitating agent, as disclosed in [4] or [5]. In reference [4], a quicklime is slaked on-site to obtain a lime slurry which is mixed with the brine in order to obtain magnesium hydroxide. The brine is previously treated by acidification to remove carbonates. However, the use of a slurry obtained from slaking of quicklime resulted in a poor control of the process and the purity of the product obtained was always very low, reaching a maximum 91% Mg(OH)₂. Reference [5] discloses adding sulfuric acid to brine to lower the pH and convert the bicarbonate into carbonic acid which can be off gassed as CO₂. This acid treatment is followed by lime (Ca(OH)₂) addition to precipitate magnesium hydroxide in a first step, and then by soda ash (Na₂CO₃) addition to precipitate calcium carbonate (CaCO₃) in a second step, yielding low purity magnesium hydroxide.

References [6] and [7] both disclose zero liquid discharge water desalination processes with minerals extraction, said processes allowing to minimize the amount of liquid returned to the water body and while obtaining valuable minerals such as gypsum and magnesium hydroxide. In the processes of [6] and [7], CO₂ is stripped out from the saline stream during acidification.

Document [8] discloses the use of membrane contactors to dissolve CO₂ into a permeate to adjust the pH of said permeate, said CO₂ being produced by acidification of a saline stream. However, an external source of calcium is always used to adjust the hardness of said permeate to its final application. Additionally, the efficiency of CO₂ separation in liquid/liquid membrane contactors is limited by the absorption capacity of the receiving stream, while more suitable liquid/gas systems.

As a result, there is still a need for a more sustainable and flexible remineralization process, capable of taking advantage of the ions already available in a brine, such as a the brine from a desalination plant, thus avoiding or limiting the need for external reagents useful for adjusting alkalinity and hardness of the produced water. It would indeed be beneficial to lower the need for reagents in the production of mineralized water from saline water, by producing the reagents for potabilization from said brine for instance, thus lowering the need for external reagents, and hence the operational expenditures. There is also a need to avoid the creation of waste streams and maximize resources valorization.

There is also still a need for a process for producing high purity magnesium and calcium minerals along with carbon dioxide using reagents produced in controlled conditions, which would advantageously not require slaking and already dissolved homogeneously resulting in an energy efficient process which in particular does not require a series of nanofiltration units for concentrating the minerals.

Cited References:
[1] WO2015077727A1,
[2] WO2017205072A1,
[3] WO2017168425A1,
[4] Gong, Magnesium Recovery from Desalination Brine, CEED Seminar Proceedings 2018, pp 49-54,
[5] Mohammadesmaeili et al. Water Environment Research, April 2010, Vol. 82, No. 4 (April 2010), pp. 342- 350,
[6] US9045351B2,
[7] US10246357B2,
[8] WO2010104751A1.

### Summary of the invention

Therefore, in a first aspect, the invention relates to a method for producing mineralized water comprising:
a) providing a saline water comprising ions, including carbonate ions, magnesium ions and calcium ions,
b) treating said saline water comprising ions by desalination to produce a desalinated water and a brine, the desalinated water being depleted in said ions initially contained in said saline water and the brine being concentrated in said ions initially contained in said saline water,
c) performing a step of carbonates removal on at least part of said brine of step b) to produce gaseous CO₂ and a brine depleted in carbonate ions,
d) performing a crystallization on the brine of step c) depleted in carbonate ions to produce (i) at least one mineral product chosen from a magnesium containing mineral and a calcium containing mineral, and (ii) a treated solution at least partially depleted in ions chosen from calcium and/or magnesium ions,
e) remineralizing the desalinated water produced in step b), said remineralizing comprising adding at least part of said at least one mineral product and at least part of said gaseous CO₂ to at least part of said desalinated water to produce a mineralized desalinated water.

In another aspect, the invention relates to an installation for providing mineralized water, said installation comprising at least:
- a desalination unit comprising at least a first inlet, a first outlet and a second outlet, said desalination unit being configured to be fed at said first inlet with saline water comprising ions, including carbonate ions, magnesium ions and calcium ions, and to produce a desalinated water recovered at said first outlet and a brine recovered at said second outlet, said desalinated water being depleted in said ions initially contained into said saline water and said brine being concentrated in said ions initially contained into said saline water,
- a carbonates removal unit for removing carbonate ions comprising at least a first inlet fluidly coupled to the second outlet of the desalination unit, a first outlet and a second outlet, said carbonate removal unit being configured to remove carbonate ions from said brine fed at said first inlet and to produce gaseous CO₂ recovered at the first outlet and a brine depleted in carbonate ions recovered at the second outlet,
- a crystallization unit comprising at least a first inlet fluidly coupled to the second outlet of the carbonates removal unit, a first outlet and a second outlet, the crystallization unit being configured to be fed at the first inlet with the brine depleted in carbonate ions and to crystallize (i) at least one mineral product chosen from a magnesium-containing mineral and a calcium-containing mineral recovered at the first outlet, and to produce (ii) a depleted treated solution at least partially depleted in ions chosen from calcium and/or magnesium ions recovered at the second outlet,
- a remineralization unit comprising at least a first inlet fluidly coupled to the first outlet of the desalination unit, a second inlet fluidly coupled to the first outlet of the carbonates removal unit and a third inlet fluidly coupled to the first outlet of the crystallization unit, and a first outlet, the remineralization unit being configured to mix at least part of the desalinated water fed at the first inlet, at least part of the CO₂ fed at the second inlet and at least part of said at least one mineral product fed at the third inlet to produce a mineralized desalinated water recovered at the first outlet.

The installation is adapted or configured to perform the process of the invention.

The mineralized desalinated water forms the mineralized water produced by the method and the installation of the invention. As used herein, a "mineralized water" is understood as a water containing a pre-defined amount of alkalinity and hardness (i.e. has a pH in a predefined range, and calcium and magnesium concentrations in predefined ranges), for example imposed by legislation or user requirements.

The carbonates removal step allows to greatly improving the quality of the mineral products obtained with the present method, as the treatment of a solution essentially deprived of carbonates in the crystallization step results in the production of magnesium-and/or calcium-containing mineral product with a higher purity when compared with conventional processes.

Additionally, the gaseous CO₂ (denoted CO_{2(g)}) recovered during this process is used for providing the necessary alkalinity (*i.e.* used as a base) to the desalinated water, to produce fresh water for instance for drinking purposes.

As a result, the invention allows to valorize the brine of the desalination unit, and to provide minerals and alkalinity required for the desalinated water in the remineralization step.

Additional value is then given to the brine thanks to the extraction of minerals, and in particular to magnesium-containing mineral, directly suitable for use, as an example, as chemical reagent for the chemical industry in particular.

Also, the mineral product used for remineralizing comprises Mg ions, which confers even more value to the produced drinking water. Indeed, clinical studies demonstrated that Mg deficiency - which is rather common in Israel and in Gulf Countries - leads to impaired health condition. Drinking water with increased concentrations of magnesium may thus constitute a preventive treatment to such Mg deficiencies.

The present invention thus allows producing mineralized water without using external sources of chemicals. The mineralized water produced may be suitable for human consumption (drinking water) or as reused water for beneficial purposes such as agriculture and irrigation, potable water supplies, groundwater replenishment, industrial processes, and environmental restoration.

The method and the installation of the present invention may in particular allow producing mineralized water with a pre-defined amount of alkalinity and hardness, for example by controlling the amount of mineral product(s) and CO_{2(g)} added to the desalinated water.

Some embodiments of the invention include zero discharge of waste stream.

### Drawings

These and other features, aspects, and advantages of the present disclosure will become better understood when the following detailed description is read with reference to the accompanying drawings in which like characters represent like parts throughout the drawings, wherein:
Fig. 1 is a schematic representation of a treatment scheme according to a first embodiment of the present invention.
Fig. 2 is a schematic representation of a treatment scheme according to a second embodiment of the present invention.
Fig. 3 is a schematic representation of a treatment scheme according to a third embodiment of the present invention.
Fig. 4 is a schematic representation of a treatment scheme according to a fourth embodiment of the present invention.
Fig. 5 is a schematic representation of a treatment scheme according to a fifth embodiment of the present invention.

### Detailed description

When describing the invention, the terms used are to be construed in accordance with the following definitions, unless a context dictates otherwise.

As used herein, the singular forms "a", "an", and "the" include both singular and plural referents unless the context clearly dictates otherwise. By way of example, "an outlet" means one outlet or more than one outlet.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those skilled in the art.

It is also clear that the implementation of the embodiments here described requires the use of common engineering tools such as tanks, valves, actuators, sensors, pumps and many other items that will not be detailed since they are obvious to those skilled in the art.

Preferred statements (features) and embodiments and uses of this invention are set herein below. Each statement and embodiment of the invention so defined may be combined with any other statement and/or embodiment unless clearly indicated to the contrary. In particular, any feature indicated as being preferred or advantageous may be combined with any other feature or features or statements indicated as being preferred or advantageous. Hereto, the present invention is in particular captured by any one or any combination of one or more of the below aspects and embodiments, with any other statement and/or embodiment.

### Method

The saline water typically comprises sodium, chloride, sulphate, potassium, as well as carbonate, magnesium and calcium ions.

Such saline water may be any industrial waste brine from (i) mining industry, (ii) sea and brackish water desalination, (iii) industrial water softening plants. The saline water is typically sea water or a more diluted water such as a brackish water.

Said saline water typically has a total dissolved solid (TDS) content ranging from about 4 to about 40 g/L (as determined by ASTM D5907-18 method), generally mainly constituted by sodium ions, with concentration usually ranging from about 0.15 to about 15 g/L (as determined by ASTM D3561-16 method) and chloride ions, with concentrations usually ranging from about 0.15 to about 25 g/L (as determined by ASTM D4458-15 method). Said saline water generally contains also non negligible amounts of sulfate ions, typically ranging from about 0.2 to about 3 g/L (as determined by ASTM D4130-15 method), and potassium, usually ranging from about 0.1 to about 500 mg/L (as determined by ASTM D3561-16 method). In said saline water, calcium ions usually have a concentration ranging from about 50 to about 500 mg/L while magnesium ions usually have a concentration from about 30 to about 2000 mg/L (both determined as in ASTM D511 - 14). Said saline water may further comprise carbonate ions with a concentration typically ranging from about 50 mg/L to about 200 mg/L and may be characterized by pH values typically ranging from about 7 to about 8.5 (as determined respectively by quantitative titration methods and pH meter).

### Desalination step b)

The desalination step may be a thermal desalination step or a membrane filtration step. The thermal desalination step may be a multiple stage flash (MSF) distillation step or a multi effect distillation (MED) step.

The membrane filtration step may be a reverse osmosis step or a nanofiltration step, preferably a reverse osmosis step, or any other appropriate membrane filtration step. Both reverse osmosis and nanofiltration are well known membrane filtration methods in the art. When a membrane filtration step is used, the desalinated water is named "permeate", while the brine is named "retentate".

In a preferred embodiment, the desalination step is a membrane filtration step.

Desalination step allows producing a desalinated water essentially free of ions, at least divalent ions, and a brine which practically concentrates all the ions, in particular at least divalent ions, contained initially in the saline water. By "essentially free of ions", is understood a desalinated water having a TDS content of at most 1g/L, preferably of at most 300 to 400 mg/L (as determined by ASTM D5907-18 method).

Said brine typically comprises sodium, chloride, potassium, sulphate, carbonate, magnesium and calcium ions in proportions which are dependent from the composition of the inlet saline water, but also on operating conditions of the desalination step, for example on the recovery factor imposed to a membrane filtration unit and its rejection capacity toward the specific ions.

### Carbonates removal step c)

As used herein, carbonate ions or carbonates encompass both CO₃²⁻ and HCO₃⁻ anions and dissolved CO₂.

This step of carbonates removal is performed on at least part of the brine produced by the desalination unit and results in gaseous CO₂ (also noted CO_{2(g)}) and a brine depleted in carbonate ions.

The step of removing carbonate ions allows to keep magnesium and calcium ions in the brine to increase their recovery in the crystallization step.

In one embodiment, said step of carbonates removal comprises a step c11) of adjusting the pH of the concentrated brine produced in step b) to a value of 7 or less, i.e. to an acidic pH, to produce an acidified brine. Such pH adjustment is preferably performed by adding an aqueous acidic solution containing for instance HCl and/or H₂SO₄ acids or any other appropriate acid.

In this acidification step c11), the amount of acid solution used depends on the initial amount of carbonates in the concentrated brine solution and in the desired purity of the mineral product(s) to be recovered in the following crystallization step.

It might be noted that the concentrated brine from the desalination step can be only partially acidified in the pH adjustment step c11) in order to produce an amount of CO_{2(g)} which is equal to the amount of CO₂ required for the remineralization of the desalinated water.

The acidification of the brine usually leads to CO_{2(g)} formation following the carbonates equilibrium relations related to solution alkalinity shown in the below equations (1.1 to I.4):

CO₃²⁻ + H⁺↔ HCO₃⁻ (I.1)

HCO₃⁻ + H⁺ ↔ H₂CO₃ (I.2)

H₂CO₃ ↔ CO_{2(aq)} + H₂O (I.3)

CO_{2(aq)} + H₂O ↔ CO_{2(gas)} + H₂O (I.4)

Therefore, the step of removing carbonate ions advantageously further comprises a step c12) of separating CO₂ from the acidified brine to produce CO_{2(g)} and a brine depleted in carbonate ions. Such brine still comprises the other ions initially contained in the saline water and in particular magnesium and calcium ions.

Such separation step may be performed using membrane contactors, as the one used in [8]. However, in a preferred embodiment, this separation step c12) is performed by stripping, and in particular by vapour or gas stripping for more efficiency in the CO_{2(g)} recovery.

In a useful embodiment, the concentrated brine is mixed, typically in a static mixer, with the acidic solution in the pH adjustment step c11) prior to being subjected to CO₂ separation step c12) in a specific unit, typically a stripping unit such as a stripping column. This configuration allows exploiting the pressure energy characterizing the flows of the desalination unit, in particular of a membrane filtration unit, for the mixing of the reagents, thus avoiding the use of additional devices such as mixing tanks equipped with motor and impellers. Additionally, the adoption of a stripping column allows for a complete and efficient separation of the CO_{2(g)} produced which can be then easily conveyed in process lines.

In another embodiment, the carbonates removal step may be achieved exploiting heat, with or without the pH adjustment step described above. In this case, increasing temperature reduces carbonates solubility resulting in their crystallization in the form known as scale, mainly as calcium and magnesium minerals. Additionally, CO₂ release from the brine is also obtained by heating the solution since temperature affects dramatically CO₂ solubility.

In this embodiment, an optional step c11) of adjusting the pH of the concentrated brine to produce an acidified brine may be performed as in the previous embodiment. Then, a step c22) of heating the brine concentrated in said ions or the acidified brine is performed at a temperature of 40°C or more to produce a heated brine, CO_{2(g)} and scale. Finally, a step c23) of separating the CO_{2(g)} and scale from the heated brine is performed to produce a brine depleted in carbonate ions and CO_{2(g)}.

The process time and/or temperature of the step c22) of heating the brine may be chosen in order to produce an amount of CO₂ which is equal to the amount of CO₂ required for the remineralization of the desalinated water.

The separation step c23) may include a liquid/solid separation step performed using any liquid/solid separation method, including filtration and gravimetric separation (sedimentation, centrifugation) to separate the scale from the heated brine followed by a step of separating CO₂ from said heated brine to produce CO_{2(g)} and a brine depleted in carbonate ions. This step of separation separating CO₂ may be performed as the separation step c12) of the previous embodiment.

The heating step c22) may be performed in a heating device conveniently interposed between the desalination unit and the crystallizing unit, carbonates precipitation and CO_{2(g)} production can thus be obtained at once. The CO_{2(g)} produced can then be used for the desalinated water remineralization as in the other embodiments of the present invention.

Non limiting examples of this heating device can be boilers, line heaters or other exchange devices.

Depending on the pH and/or temperature achieved in the carbonates removal step of the brine and the efficiency of the CO₂ separation, the carbonate ions content can get as low as about 1 mg/L (determined by using ion chromatography).

The carbonate removal step can be performed simultaneously to the desalination step, especially when the desalination step b) is a thermal desalination step.

### Crystallization step d)

The crystallization step d) is performed on the brine depleted in carbonate ions to produce (i) at least one mineral product chosen from a magnesium containing mineral and a calcium containing mineral, and (ii) a depleted treated solution at least partially depleted in magnesium ions chosen from calcium and magnesium ions.

Depending on the quality of the saline water, said mineral product produced may be a magnesium containing mineral and/or a calcium containing mineral.

The crystallization step is typically a reactive process in which a basic solution is added to the brine depleted in carbonate ions produced in step c) to react with the major ions therein contained resulting in mineral product which are practically insoluble. This basic solution may contain at least one reagent chosen from NaOH, KOH, Ca(OH)₂, Na₂CO₃ and NH₄OH.

The mineral product produced in the crystallization step may comprise exclusively or jointly magnesium and calcium carbonates, sulphates and hydroxides, depending on the reagent added. Advantageously, the basic solution may contain at least one reagent chosen from NaOH, KOH, preferably NaOH, to produce magnesium and calcium hydroxides.

A preferred mineral product produced in the crystallization step is magnesium hydroxide. In an embodiment, the method further comprises a first crystallization step to produce a first mineral product comprising magnesium, preferably magnesium hydroxide and a first treated solution preferably depleted in magnesium ions, and a second crystallization step on the first treated solution to produce a second mineral product comprising magnesium and calcium minerals, and a second treated solution depleted in magnesium and calcium ions. Said second product comprising magnesium and calcium minerals may advantageously be used to remineralize the desalinated water to produce a treated water suitable for instance as drinking water. In other words, in a preferred variant of this embodiment, the method further comprises a step of remineralizing the desalinated water of the desalination step, said remineralizing comprising adding at least part of the second product comprising magnesium and calcium minerals to the desalinated water of the desalination step.

In a preferred embodiment, the crystallization step d) (including one or two crystallization steps) is performed under controlled pH, and in particular at a controlled pH from 9 to 14, preferably from 10.5 to 13.5 to enhance the precipitation of magnesium containing mineral and/or a calcium containing mineral. Such pH control may be performed by appropriate dosing of the basic solution.

In an advantageous embodiment, the crystallization step is implemented in two steps:
d1) a first step of crystallization performed at a controlled pH from 9 to 11.5, preferably from 10.5 to 11.5, to produce a first mineral product containing magnesium and a first treated solution depleted in magnesium ions,
d2) a second step of crystallization of said first treated solution performed at a controlled pH from 11.5 to 14, preferably from 12 to 14, to produce a second mineral product containing both calcium and magnesium and a second treated solution depleted in both calcium and magnesium ions.

The crystallization may preferably be performed at ambient temperature, without specific heating, for a residence time sufficient to crystallize substantially all of the magnesium and/or calcium ions. Such residence time may be determined by the man skilled in the art by determining the mass of magnesium- and/or calcium-containing mineral products recovered, the crystallization being considered as complete when this mass does not change anymore.

In a preferred embodiment of the present invention, the mineral product of the first crystallization step is magnesium hydroxide, in particular obtained with very high purity (of 98%_{wt} or more). In such case, the basic solution added to the crystallization step is preferably NaOH.

The purity of the minerals may be assessed using ICP or ionic chromatography. Typically, a sample of the minerals is washed with distilled water, then dissolved under acidic conditions, and submitted to ionic chromatography. The purity is then calculated as the ratio of the concentration of a specific cation (typically magnesium) to the sum of the concentrations of all the cations present in the sample.

The inventors have observed that the purity of the Mg(OH)₂ obtained after carbonates removal is of 98%_{wt} or more, while without this step, the purity drops to between 90% and 97%_{wt}.

In an embodiment of the present invention, the mineral product of the second crystallization step is a mixture of calcium- and magnesium-containing minerals.

### Optional separation step

The mineral product(s) produced in the crystallization step are contained in the depleted treated solution (or the above mentioned second depleted treated solution) in a solid state. In other words, the mineral product(s) crystallize within the depleted treated solution (or the second depleted treated solution), which can then be sent, optionally directly, to the remineralization unit.

The mineral product(s) produced in the crystallization step is generally produced in the form of a slurry (i.e. a viscous aqueous suspension), which can be typically concentrated by allowing the depleted treated solution (or the second depleted treated solution) to settle.

In an embodiment, the method of the invention may comprise a separation step in which said at least one mineral product produced in the crystallisation step is separated from the depleted treated solution (or from the above mentioned second depleted treated solution) as a slurry or a solid before being added to at least part of said desalinated water in the remineralization step. This separation step may be a liquid/liquid separation step or a solid/liquid separation step.

Such liquid/liquid or solid/liquid separation may be performed by any liquid/liquid or solid/liquid separation, including filtration and gravimetric separation (sedimentation, centrifugation). In a preferred embodiment the solid liquid separation is a filtration, more precisely using filtration surfaces rather than volumetric filtration.

The separation step may preferably be performed at ambient temperature, without specific heating, for a processing time and/or under conditions sufficient to perform the required separation. Such processing time and/or conditions may be determined by the man skilled in the art experimentally.

In one embodiment, the remineralization step comprises a step of mixing said at least one mineral product, in particular contained in the depleted treated solution (or the second depleted treated solution) or not, with at least part of said desalinated water, optionally with pH adjustment, to produce a mineral containing aqueous solution which is then mixed with the rest of the desalinated water to obtain a desalinated water enriched in mineral products. This allows producing a water, in particular with a defined alkalinity suitable for instance as drinking water. In other words, at least part of the desalinated water may be mixed with said at least one mineral product either in the depleted treated solution (or the second depleted treated solution), in the form of a slurry for dilution, or in the form of a solid, for dissolution. This embodiment is particularly advantageous when the mineral products produced in the crystallization step is in the form of a solid as it does not require the supply of an external aqueous solution, thus reducing the overall costs. The pH adjustment may be an acid addition, for example to transform Mg or Ca hydroxides in soluble chlorides or sulfates.

In one embodiment, the mineral product(s) are isolated from the depleted treated solution (or the second depleted treated solution), as a solid after a solid/liquid separation step. At least part of the solid recovered is then put in a solution, typically in an acidic solution which can be obtained preferably by mixing a portion of the desalinated water with an acid, to form a mineral solution which is then added to the rest of the desalinated water in the remineralization step e). In other words, the crystallization step may be followed by:
- a solid/liquid separation step in which said at least one solid mineral product is separated from the depleted treated solution (or from the above mentioned second depleted treated solution),
- a mixing step, in which said at least one solid mineral product is mixed with an aqueous solution (preferably a part of the desalinated water), and optionally with an acidic solution, to produce a solution containing the at least one solid mineral product. This solution can then be added, at least partly, to said desalinated water to produce a mineralized desalinated water in the remineralization step.

In one embodiment where the crystallization step is performed in two crystallization steps, at least one of the first or second mineral products is further subjected to solid-liquid separation for obtaining at least one first solid mineral product or second solid mineral product.

In a useful embodiment of the invention, the mineral product(s) is(are) produced in the form of a slurry which is separated from the depleted treated solution (or from the above mentioned second depleted treated solution) by a liquid/liquid separation step, and directly added to said desalinated water in the remineralization step e). This embodiment allows reducing the need for an acidic solution that may be required for dissolution of solid mineral product(s).

### Remineralization step e)

Typically, the remineralization step e) is based on the reaction between dissolved carbon dioxide and calcium and/or magnesium ions, preferably initially present as calcium and/or magnesium hydroxide.

The remineralization step can be implemented by mixing the desalinated water or at least part of the desalinated water with the gaseous CO₂ produced in the carbonates removal step and with at least part of the said at least one mineral product from the crystallization step.

In one embodiment, the remineralization step comprises a step of mixing the gaseous CO₂ produced in the carbonates removal step with the desalinated water, or a portion of it, to obtain a desalinated water enriched in alkalinity, to produce a treated water suitable for instance as drinking water. As previously mentioned, the conditions of the carbonates removal step can be chosen so as to produce the quantity of gaseous CO₂ required to obtain a desalinated water with a pre-defined amount of alkalinity.

As already mentioned, in the remineralization step, the mineral product(s) of the crystallization step may be contained in the depleted treated solution (or the second depleted treated solution) containing the mineral product(s) and directly mixed with the desalinated water or a portion of it, or may be in the form of a slurry, directly mixed to the desalinated water or a portion of it, or may be in the form of a solid preferably mixed with an aqueous solution (preferably a part of the desalinated water) before mixing with the desalinated water or with a portion of it.

In any of the embodiments, the remineralization step may include an acid addition step, in particular to transform Mg or Ca hydroxides in soluble chlorides or sulfates. This acid addition can be performed by addition of acid to the depleted treated solution (or the second depleted treated solution) containing the mineral product(s), to the mineral product(s) in the form of a slurry, or to the mineral product(s) in the form of a solid and it takes place in an aqueous solution. This acidification may allow providing Mg or Ca (hardness) independently from CO₂ addition (alkalinity) in the remineralization step.

### Optional electrochemical Step

In an advantageous embodiment, the method further comprises a step of performing an electrochemical treatment on the depleted treated solution or on said second treated solution depleted in magnesium and calcium ions, to obtain an acidic solution, a basic solution and a solution partially deprived in (with a lower content of) sodium chloride (NaCI).

The electrochemical treatment is advantageously electrodialysis, which is preferably performed in a module comprising bipolar membranes. In such case, the electrodialysis is referred to as EDBM.

When performed with EDBM, if the initial saline solution contains chlorides (Cl⁻), sulfates (SO₄²⁻), sodium (Na⁺) and potassium (K⁺), the acid solution prepared contains both HCI and H₂SO₄ while the basic solution contains both NaOH and KOH.

Said acidic solution and/or a basic solution may then be used:
- to adjust the pH of the saline water before the desalination step to reduce/avoid scaling formation, in particular when the desalination step is a membrane filtration step, and/or
- to adjust the pH of at least a portion of the desalinated water used in said mixing step performed before the remineralization step for dissolving at least part of said at least one mineral product or said second mineral product comprising magnesium and calcium minerals, and/or
- to adjust the pH of the brine in the carbonate removal step, and/or
- as reagent in the crystallization step.

Said solution partially depleted in sodium chloride is preferably mixed to the saline water of the process, especially prior to the desalination step, in particular a membrane filtration step, in order to increase the global recovery of mineralized water from saline solution. Alternatively, it may be discharged into the sea, optionally after dilution.

Flow rates, voltages and currents of the EDBM unit are adjusted to obtain a desired concentration of the acid and basic solution created. Liquid connections and flow rates can be tuned in a by-pass mode or feed-and-bleed configuration to obtain more concentrated or diluted solutions. If the acid solution is to be produced also for the use in the remineralization process, the acid channel may be fed with a portion of the desalinated water produced in the desalination unit.

Increasing current density would result in higher voltages and hence higher electrical power but can allow operating with a smaller stack. On the other hand, adopting low current density can result in great reduction of operating costs.

In a preferred embodiment of the present invention, the productive cycle is closed when water with a select amount of Ca and Mg ions is produced with a defined alkalinity and pH.

This is obtained by mixing of the CO_{2(g)}, obtained during carbonates removal with said at least one mineral product chosen from a magnesium-containing mineral and a calcium-containing mineral and advantageously with the second mineral product of the second crystallization step, and eventually a part of the acid solution produced in the electrochemical unit with the desalinated water of the desalination unit.

This mixing can be obtained at once by using static or mechanical mixing device such as static mixers and/or mechanical mixer or blender or it can also be implemented in multiple steps with different sequences of static and mechanical mixers designed to obtain the optimal sequence of dissolution. In a particular embodiment at least a portion of the desalinated water is passed through a static mixer for CO_{2(g)} dissolution, in the middle of this mixer the acid solution is also added and finally this enriched desalinated water is sent to the mixer tank, equipped with a motor and a propeller (or an impeller) where it is further mixed with the second solid product. In a variation of this embodiment, the last mixer tank is substituted with another static mixer.

The portion of desalinated water to be diverted to the mixing can be chosen to be sufficiently higher than the solubility of the minerals contained in the mineral product, thus limiting or avoiding the need of the mixing with the acid solution.

### Installation

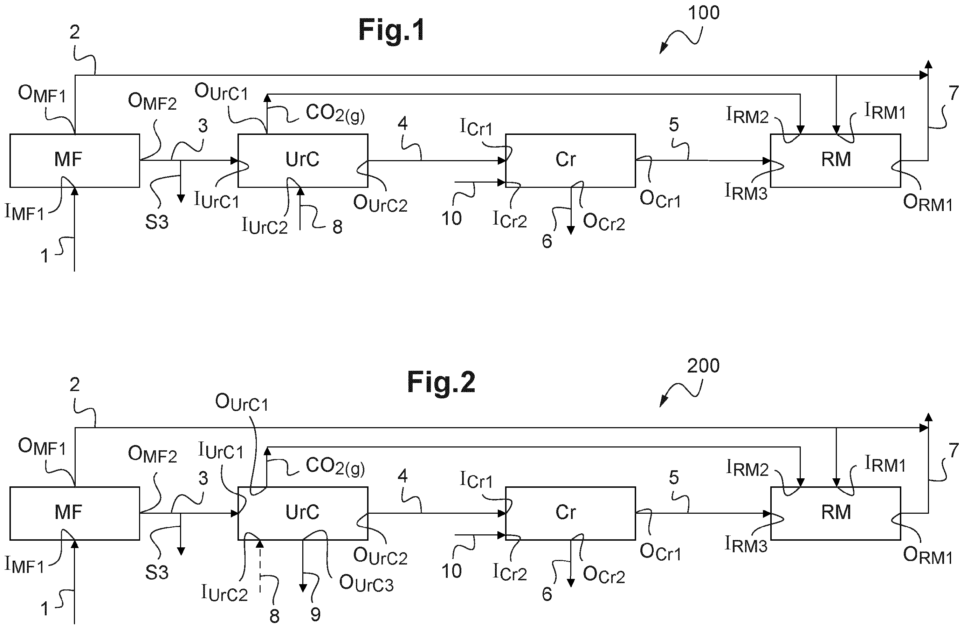

As shown in figure 1, the installation 100 for providing mineralized water, in particular with defined alkalinity and hardness, comprises at least a desalination unit (MF) to perform the desalination step, a carbonates removal unit (UrC) to perform the carbonate removal step, a crystallization unit (Cr) to perform the crystallization step and a remineralization unit (RM) to perform the remineralization step.

The desalination unit (MF) comprises at least a first inlet (I_{MF1}), a first outlet (O_{MF1}) and a second outlet (O_{MF2}). The desalination unit (MF) is configured to be fed at the first inlet (I_{MF1}) with saline water (1) comprising ions, including carbonate ions, magnesium ions and calcium ions, and to produce a desalinated water (2) recovered at the first outlet (O_{MFI}) and a brine (3) recovered at the second outlet (O_{MF2}). The desalinated water (2) is depleted in those ions initially contained into the incoming saline water while the brine is concentrated in the same ions.

The desalination unit (MF) can be a thermal desalination unit (MSF or MDE unit) or a membrane filtration unit, such as any of a reverse osmosis unit or a nanofiltration unit known in the art suitable for treating saline water, preferably a reverse osmosis unit. The carbonates removal unit (UrC) comprises at least a first inlet (I_{UrC1}) fluidly coupled to the second outlet (O_{MF2}) of the desalination unit and a first outlet (O_{UrC1}) and a second outlet (O_{UrC1}). This carbonates removal unit (UrC) is configured to remove carbonate ions from the brine (3) fed at its first inlet (I_{UrC1}) and to produce CO_{2(g)} recovered at its first outlet (O_{UrC1}) and a brine (4) depleted in carbonate ions recovered at its second outlet (O_{UrC2}).

The crystallization unit (Cr) comprises at least a first inlet (I_{Cr1}) fluidly coupled to the second outlet (O_{UrC2}) of the carbonates removal unit, a first outlet (O_{Cr1}) and a second outlet (O_{Cr2}).

The crystallization unit (Cr) is configured :
- to be fed at the first inlet (I_{Cr1}) with the brine (4) depleted in carbonate ions,
- to crystallize (i) at least one mineral product (5) chosen from a magnesium-containing mineral and a calcium-containing mineral, recovered at the first outlet (O_{Cr1}), and
- to produce (ii) a depleted treated solution (6) at least partially depleted in ions chosen from calcium and/or magnesium ions recovered at the second outlet (O_{Cr2}). Typically, the crystallization unit (Cr) comprises a second inlet (I_{Cr2}) for addition of a reagent, generally a basic solution (10).

The remineralization unit (RM) comprises at least a first inlet (I_{RM1}) fluidly coupled to the first outlet (O_{MFI}) of the desalination unit, a second inlet (I_{RM2}) fluidly coupled at the first outlet (O_{UrC1}) of the carbonates removal unit and a third inlet (I_{RM3}) fluidly coupled to the first outlet (O_{Cr1}) of the crystallization unit, and a first outlet (O_{RM1}). The remineralization unit is configured to mix the desalinated water (2) (or a portion of it) fed at its first inlet (I_{RM1}), the CO_{2(g)} fed at its second inlet (I_{RM2}) and said at least one mineral product fed at its third inlet (I_{RM3}) to produce a mineralized desalinated water (7) recovered at the first outlet (O_{RM1}). As shown in the figure 1, the mineralized desalinated water (7) may be mixed with a part of the desalinated water (2) to produce mineralized water. Alternatively, the mineralized desalinated water (7) may form the mineralized water produced by the installation.

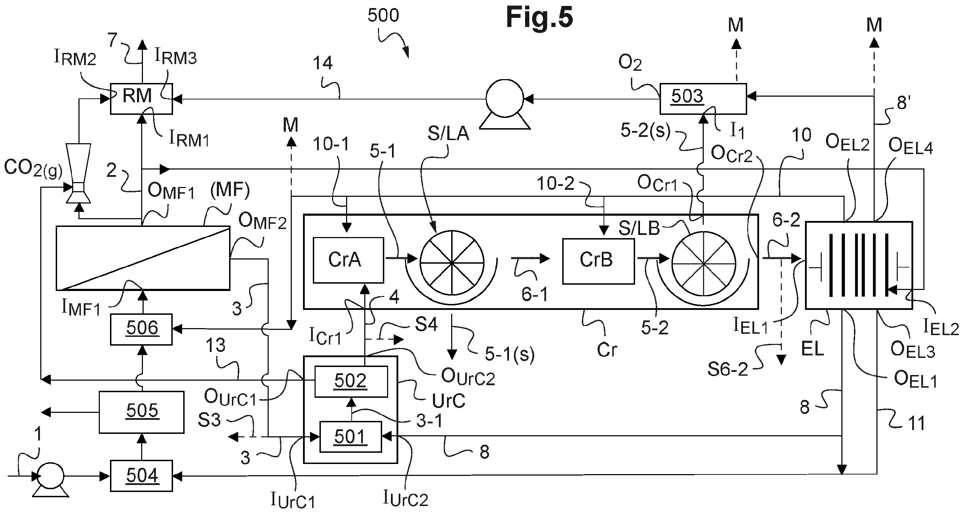

In the embodiment represented figure 1, the carbonates removal unit (UrC) further comprises a second inlet (I_{UrC2}) for introduction of a reagent (8) for production of gaseous CO₂, said reagent (8) being an aqueous acidic solution as previously described. As best shown in figure 5, the carbonates removal unit (UrC) may comprise a mixing capacity (501) for mixing the brine (3) with the reagent (8), for example a static mixer, the resulting acidified brine (3-1) being then introduced into a CO₂ separation unit, such as a stripping unit (502) to recover CO_{2(g)} and the brine (4) depleted in carbonate ions. This stripping unit (502) is preferably a vapour or gas stripping column.

In the embodiment represented figure 2, the installation 200 differs from the installation 100 of figure 1, only by the carbonates removal unit (UrC) which comprises a third outlet (O_{UrC3}) for evacuation of scale (9). This embodiment of the carbonates removal unit (UrC) may be combined with the one of figure 1. The carbonates removal unit (UrC) may then include the second inlet (I_{UrC2}) for introduction of a reagent (8) (an aqueous acidic solution) for production of gaseous CO₂. In the embodiment of figure 2, the carbonates removal unit (UrC) may comprise an optional mixing capacity for mixing the brine (3) with the reagent (8) (similar to the mixing capacity of figure 5), a heating device configured for heating the brine (2) or acidified brine to a temperature of 40 °C or more to produce a heated retentate, gaseous CO₂ and scale, where the heated brine is introduced into a CO₂ separation unit, such as a stripping unit to recover CO_{2(g)} and the brine (4) depleted in carbonate ions. The heating device as well as the third outlet for scale evacuation may be provided into the mixing capacity.

Typically, the carbonates removal unit (UrC) may comprise pH control means for controlling the pH of the incoming brine. Such pH control means typically comprises a pH measurement device connected to a regulation controlling, preferably in real time, the amount of acidic solution introduced into the brine in the carbonates removal unit (UrC).

The crystallisation unit (Cr) may comprise a single crystallization capacity comprising said first inlet (I_{Cr1}), first outlet (O_{Cr1}) and second outlet (O_{Cr2}), and generally second inlet (I_{Cr2}), for performing a single crystallisation step, as represented schematically in figures 1 and 2.

In another embodiment, the crystallization unit (Cr) can be configured to perform two crystallization steps by using either a single or two crystallization capacities. When a single crystallization capacity is provided (not represented), it then comprises a duct fluidly coupling the second outlet (O_{Cr2}) to the first inlet (I_{Cr1}) configured to send all the fluid exiting the single crystallization capacity back into it. In this case, the first crystallization is performed first to recover a first mineral product at the first outlet (O_{Cr1}) and a first treated solution depleted in ions at the second outlet (O_{Cr2}) which is sent back to the crystallization capacity via the duct (for example using a three-way valve or equivalent) so as to be submitted to a second crystallization step, where the second mineral product is recovered at the first outlet (O_{Cr1}) and a second treated solution depleted in ions is recovered at the second outlet (O_{Cr2}) and eventually used in the treatment chain of the invention as detailed below.

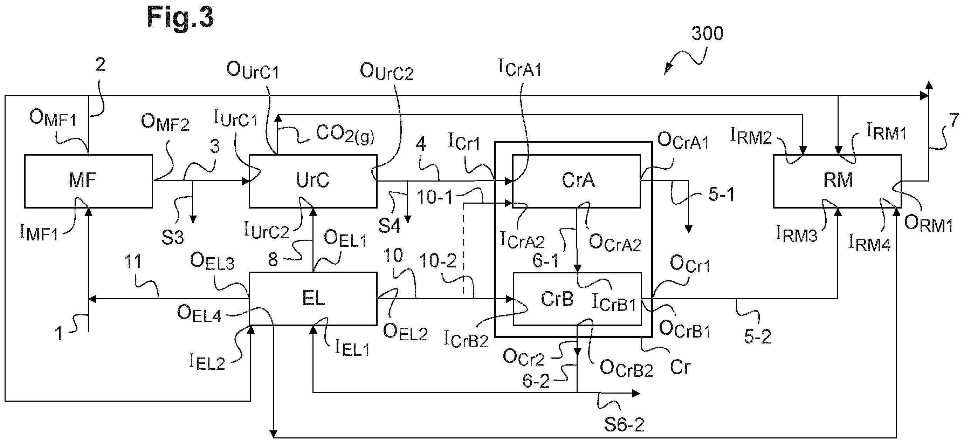

In the embodiment of figure 3, the crystallisation unit (Cr) of the installation 300 represented comprises two crystallization capacities (CrA) and (CrB). The first crystallization capacity (CrA) comprises at least a first inlet (I_{CrA1}) fluidly coupled to the first outlet (O_{UrC1}) of the carbonates removal unit (UrC), a first outlet (O_{CrA1}), a second outlet (I_{CrA1}) and generally a second inlet (I_{CrA2}). The first crystallization capacity (CrA) is configured to be fed at its first inlet (I_{CrA1}) with the brine (4) depleted in carbonate ions, and generally with a first basic solution (10-1) at its second inlet (I_{CrA2}), to produce a first mineral product (5-1) recovered at the first outlet (O_{CrA1}) and a first treated solution depleted in ions (6-1) recovered at its second outlet (O_{CrA2}). The second crystallization capacity (CrB) comprises at least a first inlet (I_{CrB1}) fluidly coupled to the second outlet (O_{CrA2}) of the first crystallization capacity, a first outlet (O_{CrB1}), a second outlet (O_{CrB2}) and generally a second inlet (I_{CrB2}). The second crystallization capacity (CrB) is configured to be fed at its first inlet (I_{CrB1}) with the first treated solution depleted in ions (6-1), and generally with a second basic solution (10-2) at its second inlet (I_{CrB2}), to produce a second mineral product (5-2) recovered at its first outlet (O_{CrB1}) and a second treated solution (6-2) depleted in ions recovered at a second outlet (O_{CrB2}). The first outlet (O_{CrB1}) of the second crystallization capacity (CrB) is fluidly coupled to the third inlet (I_{RM3}) of the remineralization unit (RM). The first mineral product (5-1) recovered at the first outlet (O_{CrA1}) of the first crystallization capacity may be sold and used in other industry.

Advantageously, as represented in figure 3, the installation further comprises an electrochemical unit (EL) to perform the electrochemical step. This electrochemical unit (EL) comprises at least a first inlet (I_{EL1}), a first outlet (O_{EL1}), a second outlet (O_{EL2}), and a third outlet (O_{EL3}). The first inlet (I_{EL1}) is fluidly connected to the second outlet (O_{CrB2}) of the second crystallization capacity when two crystallization capacities are provided as in the embodiment of figure 3. Alternatively, this first inlet (I_{EL1}) may be fluidly connected to the second outlet of the crystallisation unit (O_{Cr2}) or to the second outlet of a single crystallization capacity.

The electrochemical unit (EL) is configured to produce an acidic solution (8) at its first outlet (O_{EL1}), and optionally an acidic solution (8') at a fourth outlet (O_{EL4}), a basic solution (10) at its second outlet (O_{EL2}) and a solution (11) with a lower content of sodium chloride at its third outlet (O_{EL3}).

The basic solution (10) produced by the electrochemical unit (EL) at its second outlet (O_{EL2}) may form or be used to form the second basic solution (10-2) introduced into the second crystallization capacity of figure 3, eventually the first basic solution (10-1) introduced into the second crystallization capacity of figure 3, or the basic solution (10) of figures 1 and 2.

The acidic solution produced by the electrochemical unit (EL) at its first outlet (O_{EL1}) and/or at its fourth outlet (O_{EL4}) may form or be used to form the acid solution (8) introduced into the carbonates removal unit and/or an acidic solution (8') sent to the remineralizing unit (RM).

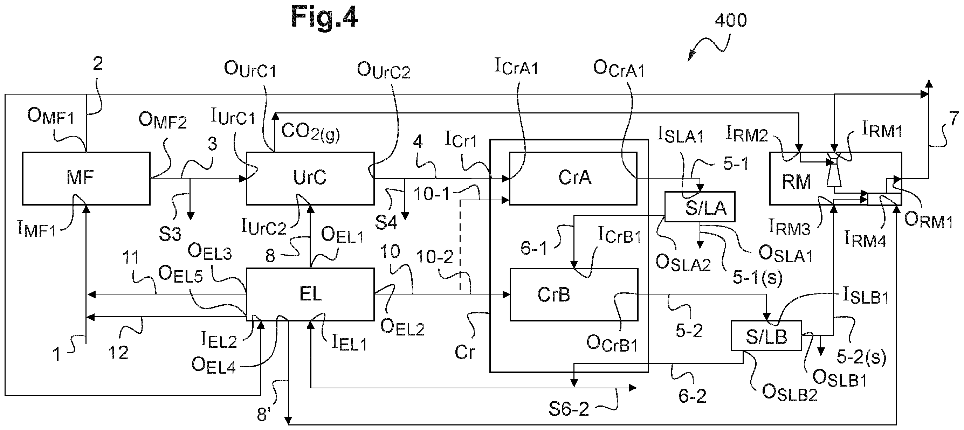

The electrochemical unit (EL) may include a fifth outlet (O_{EL5}) (represented in figure 4) fluidly coupled to a duct fluidly connected to the inlet (IMF1) of the desalination unit in which circulates the incoming saline water (1), this fifth outlet (O_{EL5}) being configured to provide a solution (12) which is a part of the acidic solution or of the basic solution to said incoming saline water (1).

More generally, at least one of the first and second outlets of the electrochemical unit may be fluidly coupled to :
- a pH adjusting unit (504) fluidly connected to the first inlet of the desalination unit to adjust the pH of the saline water before its entry into the desalination unit, typically a membrane filtration unit, and/or
- the desalination unit (MF) to adjust the pH of the desalinated water, in particular when the desalination unit is a membrane filtration unit, and/or
- a mixing unit (503) to adjust the pH of an aqueous solution used for dissolving at least part of said at least one mineral product or said second mineral product comprising magnesium and calcium minerals, said mixing unit comprising a first inlet (I₁ in figure 5) fluidly connected to the first outlet of crystallization unit or to the first outlet of the first crystallization capacity or to the first outlet of the second crystallization capacity, and a first outlet (O₁ in figure 5) fluidly connected to the third inlet (I_{RM3}) of the remineralization unit, and/or
- to the carbonates removal unit to adjust the pH of the brine, and/or
- to the crystallization unit.

Alternatively or in combination, the third outlet of the electrodialysis unit may be fluidly coupled to :
- a mixing unit fluidly connected to the first inlet of the desalination unit to mix said solution with a lower content of sodium chloride with the saline water prior to its entry into the desalination unit, in particular when the desalination unit is a membrane filtration unit.

Preferably, the electrochemical unit (EL) is an electrodialysis unit comprising bipolar membranes. In such case, it may comprise one or several bipolar membrane electrodialysis modules (EDBM) and it can be equipped with an additional second inlet (I_{EL2}), fluidly coupled with the first outlet (O_{MF1}) of the desalination unit (MF) and configured to be fed with a portion of the desalinated water (2) produced in the desalination unit (MF).

In a convenient variation, as shown in figure 3, the remineralization unit (RM) is equipped with a fourth inlet (I_{RM4}), which is fluidly coupled with the first outlet (O_{EL1}) of the electrochemical unit (EL) or to the second outlet (O_{EL2}) of the electrochemical unit (EL), and is configured to be fed with at least part of the acidic solution (8, 8').

The embodiment of figure 4 represents an installation 400 which differs from the installation 300 of figure 3 essentially by the presence of solid-liquid separation units S/LA and S/LB for performing solid/liquid separation steps. As represented, a first solid-liquid separation unit S/LA comprises a first inlet (I_{SLA1}) fluidly connected to the first outlet (O_{CrA1}) of the first crystallization unit, a first outlet (O_{SLA1}) and a second outlet (O_{SLA2}) fluidly connected to the first inlet (I_{CrB1}) of the second crystallization unit (CrB). This first solid-liquid separation units S/LA is configured to separate from the first mineral product (5-1), a first solid mineral product (5-1(s)) at its first outlet (O_{SLA1}) and a first treated solution (6-1) depleted in ions at its second outlet (O_{SLA2}).

Similarly, the second solid-liquid separation unit S/LB comprises a first inlet (I_{SLB1}) fluidly connected to the first outlet (O_{CrB1}) of the second crystallization capacity (CrB), a first outlet (O_{SLB1}) and a second outlet (O_{SLB2}) fluidly connected to the third inlet (I_{RM3}) of the remineralization unit (RM). This second solid-liquid separation units S/LB is configured to separate from the second mineral product (5-2) a second solid mineral product (5-2(s)) at its first oulet (O_{SLB1}) and a second treated solution (6-2) depleted in ions at its second outlet (O_{SLB2}).

Both first and second solid-liquid separation units may be any solid-separation unit, preferably a filtration unit, more precisely using filtration surfaces rather than a volumetric filtration, such as a vacuum drum filter, but filter-press or filter belt may be used too.

Of course, in the case where a single crystallization capacity is provided, a single solid-liquid separation unit may be used.

In any of the embodiments, each crystallization capacity used may be a reactor including mixing means. Typically, each crystallization capacity comprises pH control means for controlling the pH of the solution contained in the crystallizing capacity. Such pH control means typically comprises a pH measurement device connected to a regulation controlling, preferably in real time, the amount of basic solution introduced into the crystallization capacity.

In the above embodiments represented figures 1-4, the remineralization unit (RM) may preferably be configured to procure mixing and dissolution of said mineral product (5, 5-2) in at least a portion of the desalinated water (2), adjusting both alkalinity and pH with the use of CO_{2(g)} and eventually acid solution (8') when required, so as to produce water (7) with a targeted alkalinity, Ca and Mg ion concentration and pH.

The embodiments of figures 1-4 can be implemented with a membrane filtration unit as desalination unit or with a thermal desalination unit. In the last case, the carbonates removal unit may be incorporated to the thermal desalination unit.

A preferred embodiment is represented figure 5. On this figure, the installation 500 comprises a membrane filtration unit (MF), a carbonates removal unit (UrC) for removing carbonates ions, a crystallization unit (Cr), a remineralization unit (RM) and an electrochemical unit (EL).

The membrane filtration unit (MF), here a reverse osmosis unit, produces a permeate (2) and a retentate (3) which is sent to the carbonate removal unit (UrC). The carbonates removal unit (UrC) here comprises a static mixer (501) and a stripping unit (502), here a stripping column. The static mixer (501) receives the retentate (3) and an acidic solution (8) and is configured to produce an acidified retentate (3-1) provided to the stripping unit (502). The stripping unit (502) is configured to separate from the acidified retentate (3-1): gaseous CO₂ (13) and a retentate depleted in carbonate ions (4).

This retentate depleted in carbonate ions (4) enters the crystallization unit (Cr) which here comprises two crystallization capacities (CrA), (CrB). The installation (500) also comprises two solid-liquid separation units (S/LA) and (S/LB). As explained above, a single crystallization capacity and a single solid-liquid separation unit may be used. Each crystallization capacity receives a basic solution (10-1) and (10-2) for crystallization purpose. Under pH control, the first crystallization capacity allows producing magnesium-containing mineral product in a solution (5-1) which is sent to the first solid-liquid separation unit (S/LA), here a vacuum drum filter, to recover a solid magnesium-containing mineral product (5-1(s)), preferably Mg(OH)₂, and a first solution (6-1) at least depleted in ions chosen from calcium and/or magnesium ions, here in magnesium ions. This first depleted solution (6-1) is sent to the second crystallization capacity (CrB), which, under pH control, allows producing magnesium- and calcium containing mineral product in a solution (5-2) which is sent to the second solid-liquid separation unit (S/LB), here also a vacuum drum filter, to recover a solid magnesium- and calcium- containing mineral product (5-2(s)), preferably Mg(OH)₂ and Ca(OH)₂, and a second solution (6-2) at least depleted in ions, here in both calcium and magnesium ions.

The solid magnesium- and calcium- containing mineral product (5-2(s)) is then sent to a mixing capacity (503), for example a milk reactor, receiving an acidic solution (8') from the electrochemical unit (EL) as explained below, to dissolve the magnesium- and calcium- containing mineral product (5-2(s)). It should be noted that the mixing capacity (503) may be part of the remineralization unit (RM), along with the static mixer (for example a venture mixer) for CO_{2(g)} dissolution.

The second depleted solution (6-2) is sent to the electrochemical unit (EL) to produce an acidic solution, a basic solution and a solution depleted in NaCl (11). In the embodiment represented, two streams of acidic solution (8) and (8') are sent respectively to the carbonate removal unit (UrC) and to the mixing capacity (503). The stream (8) of acidic solution may also be sent, mixed with at least part, and preferably all, of the solution depleted in NaCl (11), to a static mixer (504) placed upstream from the membrane filtration unit (MF) (with respect to the circulation of incoming saline water (1)) to be used as anti-scalant. This static mixer (504) may be placed upstream of a pre-treatment unit (505), such as de coagulation-flocculation unit.

In the embodiment represented, a stream of basic solution (10) is sent to the crystallization unit (Cr) and also to a second static mixer (506) placed downstream of the first static mixer (504) and of the optional pre-treatment unit (505), and upstream of the filtration unit (MF). This second static mixer (506) may be used to adjust the pH for example so as to allow boron removal, for example by regulating the pH at 8.5.

The acidic and basic solutions in excess produced by the electrochemical unit (EL) can be sold to the market (M).

The electrochemical unit (EL) may also receive a part of the permeate (2), that can be used in the acidic and/or basic compartment of the electrochemical unit (EL) to produce low salinity acid and/or base solutions (instead of generating the acid and/or base into the treated depleted solution). In this example, the portion of the permeate (2) received is used to form a diluted acidic stream (8') to be mixed with the second solid mineral product (5-2(s)) to dissolve it in the mixing capacity (503). Thus, at the outlet of this mixing capacity (503), a solution of the second mineral product (14) is produced and sent to the remineralization unit (RM), for example in a static mixer, where it is mixed with the rest of the permeate (2) and with the gaseous CO₂ to produce mineralized water (7).

The embodiment of figure 5 is thus a zero waste embodiment and does not require the use of external chemical products or solutions to be operated.

In the above embodiments represented figures 1-5, the desalinated water/retentate (3) and/or the brine/retentate (4) at least partially depleted in ions and/or the second treated solution (6-2) depleted in ions may be partly split to form respectively a split brine/retentate (S3), a split brine/retentate (S4) at least partially depleted in ions and a split second treated solution (S6-2) depleted in ions. These splits can be stored/accumulated to be valorized in future or sent to the brine disposal system of the desalination plant. Advantageously, the split (S3) can be chosen to produce just the amount of CO₂ required for remineralization, and/or the split (S4) can be chosen to produce just the amount of mineral product desired, and/or the split (S6-2) can be chosen to produce just the acid/base solution required. Moreover, limiting the volumes treated by one or several splits reduces the size of the down-side unit, hence capital expenditures.

### Examples

The embodiments of the present invention will be better understood by looking at the example below.

A saline water has been treated in an installation similar to the one represented in figure 5, in which the desalination unit is a membrane filtration unit, here a reverse osmosis unit, and the electrochemical unit is an electrodialysis unit with bipolar membranes (EDBM). The flow rates and requirements of each of the units have been determined by simulation using mass balances. A crystallization pilot comprising plug-flow crystallizers as crystallization capacities and vacuum drum filters as S/L separation units have been used to test the separation of the calcium- and magnesium-containing mineral and to determine the purity of the magnesium containing mineral. The pilot crystallization tests have been performed using the simulated conditions (flow rate, reagent requirement). The content in main chemical elements of the saline water (seawater) used is presented into table 1. This composition has been determined by ion chromatography. The alkalinity has been determined by simple sulfuric acid titration (0.1N).

**Table 1 : Main elements contained into the inlet seawater**

| Chemical element | Content in g/m³ |
|---|---|
| Cl | 20058.06 |
| Na | 11174.42 |
| Mg | 1330.51 |
| S | 938.33 |
| Ca | 427.12 |
| K | 413.65 |
| Alkalinity | 123.52 |

Table 2 presents the inlet and outlet simulated operating flowrates (Q) of the reverse osmosis unit. The inlet flow rate corresponds to that of a real industrial plant.

**Table 2 :**

| | Q [m³/h] | Q [m³/d] |
|---|---|---|
| Seawater inlet | 22436 | |
| Permeate | 11667 | 280000 |
| Retentate | 10769 | |

We consider a membrane rejection of 99,9 wt%, a first crystallization allowing recovering 90%wt of magnesium and a second crystallization allowing recovering 99%wt of magnesium and 99%wt of calcium. The electrochemical unit produces NaOH at a concentration of 0.5 mol/L.

The simulated requirements of the installation are presented in table 3. The simulation considered a retentate split S3 of 11.54%_{v/v} and a retentate split S4 of 11.28%_{v/v}

**Table 3**

| ***Remineralization Requirements*** | | | |
|---|---|---|---|
| | | C [mol/L] | Flow [kg/h] |
| Ca(OH)₂ and Mg(OH)₂ | | | 261 |
| CO₂ | | | 198 |

| ***Acid Requirements*** | | | |
|---|---|---|---|
| | | C [mol/L] | Flow [kg/h] |
| Retentate Acidification for carbonate removal (HCl) | | 0.50 | 267 |
| Inlet Acidification of seawater (1) (HCl) | | 0.50 | 1285 |

| ***Alkaline Requirements*** | | | |
|---|---|---|---|
| | | C [mol/L] | Flow [kg/h] |
| pH swing for boron removal (in unit 506) | | 0.50 | 179 |
| Alkaline for CRB | | 0.50 | 373 |
| Alkaline for CRA | | 0.50 | 1151 |

| ***Total requirements*** | | | |
|---|---|---|---|
| | | C [mol/L] | Flow [kg/h] |
| CO₂ | | | 198 |
| Alkaline | | 0.50 | 1703 |
| Acid | | 0.50 | 1552 |

| ***Production from EDBM*** | | | |
|---|---|---|---|
| | | C [mol/L] | Flow [kg/h] |
| Alkaline | | 0.50 | 1703 |
| Acidic | | 0.50 | 1552 |

| ***CO₂ Production*** | | | |
|---|---|---|---|
| | | | Flow [kg/h] |
| CO₂ from Retentate acidification | | | 198 |

The simulated operating conditions of the installation of figure 5 are described below :
1. Before accessing the RO unit, the excess of acid (8) produced by (EL) (267 kg/h of HCI) is mixed with the solution with low levels of NaCl (11) and dosed to the inlet seawater (1) to substitute at least a portion of the anti-scalant in the pre-treatments before the RO and increasing the global recovery ratio of the plant;
2. A portion of the basic solution (10) produced by the (EL) (179 kg/h of NaOH) is used to increase the pH up to 8.5 of the incoming seawater (1) in the static mixer (506);
3. The treated inlet saline solution in the RO unit results in 11666 m³/h of permeate (2) and 10769 m³/h of retentate (3);
4. Only a portion of the retentate (2) (11.54 %_{v/v}) is sent to the first step of the brine treatment chain (carbonate removal unit (UcR) after the first split S3;
5. The split retentate is acidified in the static mixer (501) to remove 71 %_{wt} of the carbonates present in solution by dosing 1.14 moles of HCI for every mol of HCO₃⁻ (267 kg/h of HCI);
6. Gaseous CO₂ is separated in the stripping unit (502) (198 kg/h);
7. Carbonate free solution (4) is split again (11,28%_{v/v}) and sent to the first crystallizer unit (CrA);
8. Alkaline solution (10-1) (1151 kg/h of 0.5 M NaOH) is mixed with the carbonate free retentate (4) to produce the first mineral product in the first crystallizer unit (CrA);
9. The first mineral product (5-1(s)) (99.9 %_{wt} pure magnesium hydroxide 838.9 kg/h as determined from the test in the crystallization pilot) is separated in the first S/L separator S/LA;
10. The first treated solution depleted in Mg (6-1) is sent to the second crystallization unit (CrB) and mixed with the alkaline solution (10-2) (373 kg/h of 0.5 M NaOH);
11. A second mineral product (5-2(s)) is partially separated in the second S/L separator S/LB (slurry of 92 and 228 kg/h of Mg(OH)₂ and Ca(OH)₂ respectively).
12. The second treated solution (6-2) poor in divalent ions is sent to the (EL) unit to produce alkaline (1703 kg/h NaOH) and acid (1552 kg/h HCI) solutions used in all the steps of the process;
13. The second mineral product (5-2(s)) is mixed with a negligible amount of acid solution (8') and sent to the remineralization step to provide hardness;
14. CO₂ from the carbonate removal step is mixed with at least a portion of the permeate (2) produced by the membrane filtration unit (MF) and sent to the remineralization step to provide alkalinity;
15. Remineralized water (7) is obtained in the remineralization step (Hardness: 40 mg/L of eq. CaCO₃, Alkalinity: 25 mg/L of HCO₃⁻).

The flow rates and purity of the mineral products recovered are shown in table 4

**Table 4**

| | **Formula** | **M [kg/h]** | **Purity** |
|---|---|---|---|
| ***1st Mineral PRODUCT*** | Mg(OH)₂ | 838.9 | 99.9%wt |
| | Ca(OH)₂ | 0.0 | |
| ***2nd Mineral PRODUCT*** | Mg(OH)₂ | 92.3 | |
| | Ca(OH)₂ | 228.2 | |

It should be noted that a test of purity of the Mg(OH)₂ obtained in the first crystallization unit (CrA) has been performed in the crystallization pilot in the absence of acidification : the Mg(OH)₂ purity was only 98.7%_{wt}.

## Claims

**1.** A method for producing mineralized water, comprising:
a) providing a saline water comprising ions, including carbonate ions, magnesium ions and calcium ions.
b) treating said saline water comprising ions by desalination to produce a desalinated water and a brine, the desalinated water being depleted in said ions initially contained in said saline water and the brine being concentrated in said ions initially contained in said saline water,
c) performing a step of carbonates removal on at least part of said brine of step b) to produce gaseous CO₂ and a brine depleted in carbonate ions,
d) performing a crystallization on the brine of step c) depleted in carbonate ions to produce (i) at least one mineral product chosen from a magnesium-containing mineral and a calcium-containing mineral, and (ii) a treated solution at least partially depleted in ions chosen from calcium and/or magnesium ions,
e) remineralizing the desalinated water produced in step b), said remineralizing comprising adding at least part of said at least one mineral product and at least part of said gaseous CO₂ to at least part of said desalinated water to produce a mineralized desalinated water.

**2.** The method of claim 1, wherein said step of carbonates removal comprises:
c11) a step of adjusting the pH of the brine concentrated in said ions to a value of 7 or less to produce an acidified brine and carbonic acid, and
c12) a step of separating CO₂ from the acidified brine to produce gaseous CO₂ and a brine depleted in carbonate ions.

**3.** The method of claim 1, wherein said step of carbonates removal comprises:
c11) an optional step of adjusting the pH of the brine concentrated in said ions to a value of 7 or less to produce an acidified brine,
c22) a step of heating the brine concentrated in said ions or the acidified brine to a temperature of 40 °C or more to produce a heated brine, gaseous CO₂ and scale, and
c23) a step of separating the gaseous CO₂ and scale from the heated brine to produce a brine depleted in carbonate ions and gaseous CO₂.

**4.** The method of any of claims 1 to 3, wherein said step of remineralization comprises a step of mixing the gaseous CO₂ produced in the carbonates removal step with at least part of the desalinated water to obtain a desalinated water enriched in alkalinity.

**5.** The method of any of claims 1 to 4, further comprising, prior to said step of remineralization, a step of mixing said at least one mineral product with at least a portion of said desalinated water, optionally with pH adjustment, to produce a mineral containing aqueous solution which is then mixed with the rest of the desalinated water in the remineralization step to obtain a desalinated water enriched in mineral products.

**6.** The method of any of claims 1 to 5, wherein said step of crystallisation is performed at a controlled pH from 9 to 14, preferably from 10.5 to 13.5.

**7.** The method of any of claims 1 to 6, in which the crystallization step is implemented in two crystallization steps:
d1) a first step of crystallization performed at a controlled pH from 9 to 11.5 to produce a first mineral product containing magnesium and a first treated solution with a reduced content of magnesium ions,
d2) a second step of crystallization of said first treated solution performed at a controlled pH from 11.5 to 14 to produce a second mineral product containing both calcium and magnesium and a second treated solution depleted in both calcium and magnesium ions.

**7.** The method according to the previous claim 6, wherein the first mineral product in the first crystallization step is magnesium hydroxide.

**8.** The method of all previous claims, further comprising a step of electrochemical treatment of said depleted treated solution or second depleted treated solution produced in the crystallisation step, to produce an acidic solution, a basic solution, and a solution with a lower content of sodium chloride.

**9.** The method of claim 8 in which said electrochemical treatment is an electrodialysis with bipolar membranes.

**10.** The method of claims 8 and 9, in which said acidic solution and/or a basic solution is used:
- to adjust the pH of the saline water before the desalination step to avoid scaling formation, and/or,
- to adjust the pH of at least a portion of the desalinated water used in said mixing step performed before the remineralization step for dissolving at least part of said at least one mineral product or said second mineral product comprising magnesium and calcium minerals , and/or
- to adjust the pH of the brine in the carbonates removal step, and/or
- as reagent in the crystallization step.

**11.** The method of any of claims 8 to 10, in which said solution with a lower content of sodium chloride is mixed to the saline water, especially prior to the desalination step.

**12.** An installation (100, 200, 300, 400, 500) for providing mineralized water, comprising at least:
- a desalination unit (MF) comprising at least a first inlet (I_{MF1}), a first outlet (O_{MF1}) and a second outlet (O_{MF2}), said desalination unit being configured to be fed at said first inlet inlet (I_{MF1}) with saline water (1) comprising ions, including carbonate ions, magnesium ions and calcium ions, and to produce a desalinated water (2) recovered at said first outlet (O_{MF1}) and a brine (3) recovered at said second outlet (O_{MF2}), said desalinated water being depleted in said ions initially contained into said saline water and said brine being concentrated in said ions initially contained into said saline water,
- a carbonates removal unit (UrC) for removing carbonate ions comprising at least a first inlet (I_{UrC1}) fluidly coupled to the second outlet (O_{MF2}) of the desalination unit, a first outlet (O_{UrC1}) and a second outlet (O_{UrC2}), said carbonates removal unit being configured to remove carbonate ions from said brine (3) fed at said first inlet (I_{UrC1}) and to produce gaseous CO₂ recovered at the first outlet (O_{UrC1}) and a brine (4) depleted in carbonate ions recovered at the second outlet (O_{UrC2}),
- a crystallization unit (Cr) comprising at least a first inlet (I_{Cr1}) fluidly coupled to the second outlet (O_{UrC2}) of the carbonates removal unit, a first outlet (O_{Cr1}) and a second outlet (O_{Cr2}), the crystallization unit being configured to be fed at the first inlet (I_{Cr1}) with the brine (4) depleted in carbonate ions and to crystallize (i) at least one mineral product (5) chosen from a magnesium-containing mineral and a calcium-containing mineral recovered at the first outlet (O_{Cr1}), and to produce (ii) a depleted treated solution (6) at least partially depleted in ions chosen from calcium and/or magnesium ions recovered at the second outlet (O_{Cr2}),
- a remineralization unit (RM) comprising at least a first inlet (I_{RM1}) fluidly coupled to the first outlet (O_{MFI}) of the desalination unit, a second inlet (I_{RM2}) fluidly coupled to the first outlet (O_{UrC1}) of the carbonates removal unit and a third inlet (I_{RM3}) fluidly coupled to the first outlet (O_{Cr1}) of the crystallization unit, and a first outlet (O_{RM1}), the remineralization unit being configured to mix at least part of the desalinated water (2) fed at the first inlet (I_{RM1}), at least part of the CO₂ fed at the second inlet (I_{RM2}) and at least part of said at least one mineral product (5) fed at the third inlet (I_{RM3}) to produce a mineralized desalinated water (7) recovered at the first outlet (O_{RM1}).

**13.** The installation (100, 200, 300, 400, 500) of claim 12, in which the crystallization unit (Cr) comprises:
- a single crystallization capacity comprising at least said first inlet (I_{Cr1}), first outlet (O_{Cr1}) and second outlet (O_{Cr2}) and, optionally, a duct fluidly coupling the second outlet to the first inlet, or
- two crystallization capacities (CrA, CrB), a first crystallization capacity comprising at least said first inlet (I_{CrA1}), first outlet (O_{CrA1}) and second outlet (O_{CrA2}), and configured to be fed at its first inlet (I_{CrA1}) with the brine (4) depleted in carbonate ions to produce a first mineral product (5-1) recovered at the first outlet (O_{CrA1}) and a first treated solution depleted in ions (6-1) recovered at its second outlet (O_{CrA2}), and a second crystallization capacity (CrB) comprising at least a first inlet (I_{CrB1}) fluidly coupled to the second outlet (O_{CrA2}) of the first crystallization capacity, a first outlet (O_{CrB1}) and a second outlet (O_{CrB2}) and configured to be fed at its first inlet (I_{CrB1}) with the first treated solution depleted in ions (6-1) to recover a second mineral product (5-2) at its first outlet (O_{CrB1}) and a second treated solution (6-2) at its second outlet (O_{CrB2}).

**14.** The installation (300, 400, 500) of claim 12 or 13, further comprising :
- an electrochemical unit (EL) comprising at least a first inlet (I_{EL1}), a first outlet (O_{EL1}), a second outlet (O_{EL2}), and a third outlet (O_{EL3}), the first inlet (I_{EL1}) being fluidly connected to the second outlet (O_{Cr2}) of said crystallisation unit or to the second outlet of the single crystallization capacity or to the second outlet(O_{CrB2}) of the second crystallization capacity, and the electrochemical unit being configured to produce an acidic solution (8) at its first outlet (O_{EL1}), a basic solution (10) at its second outlet (O_{EL2}) and a solution (11) with a lower content of sodium chloride at its third outlet (O_{EL3}).

**15.** The installation (300, 400, 500) of claim 14, wherein :
at least one of the first and second outlets of the electrochemical unit is fluidly coupled to :
- a pH adjusting unit (504) fluidly connected to the first inlet of the desalination unit to adjust the pH of the saline water before its entry into the desalination unit, and/or
- the desalination unit (MF) to adjust the pH of the desalinated water, and/or
- a mixing unit (503) to adjust the pH of an aqueous solution used for dissolving at least part of said at least one mineral product or said second mineral product comprising magnesium and calcium minerals, said mixing unit comprising a first inlet fluidly connected to the first outlet of crystallization unit or to the first outlet of the first crystallization capacity or to the first outlet of the second crystallization capacity, and a first outlet fluidly connected to the third inlet of the remineralization unit, and/or
- to the carbonates removal unit to adjust the pH of the brine, and/or
- to the crystallization unit,
and/or, the third outlet of the electrodialysis unit is fluidly coupled to :
- a mixing unit fluidly connected to the first inlet of the desalination unit to mix said solution with a lower content of sodium chloride with the saline water prior to its entry into the desalination unit.
